(19) Europäisches Patentamt
European Patent Office
Office européen des brevets

(11) **EP 3 110 041 B1**

(12) **EUROPEAN PATENT SPECIFICATION**

(45) Date of publication and mention
of the grant of the patent:
**29.08.2018 Bulletin 2018/35**

(51) Int Cl.:
*H04B 10/2581* (2013.01)   *H04J 14/04* (2006.01)

(21) Application number: **16181717.6**

(22) Date of filing: **29.06.2012**

(54) **METHOD OF REDUCING THE MODAL DELAY IN A MULTIMODE TRANSMISSION SYSTEM**

VERFAHREN ZUM REDUZIEREN DER MODALEN VERZÖGERUNG IN EINEM
MEHRMODUS-ÜBERTRAGUNGSSYSTEM

PROCEDE DE REDUCTION DU RETARD MODAL DANS UN SYSTEME DE TRANSMISSION
MULTIMODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2011 EP 11172133**

(43) Date of publication of application:
**28.12.2016 Bulletin 2016/52**

(62) Document number(s) of the earlier application(s) in
accordance with Art. 76 EPC:
**12174430.4 / 2 541 809**

(73) Proprietor: **Xieon Networks S.à r.l.
2633 Senningerberg (LU)**

(72) Inventors:
• **Jansen, Sander
82110 Germering (DE)**
• **Kristensen, Poul
2605 Brondby (DK)**
• **Van Den Borne, Dirk
81379 Munich (DE)**
• **Grüner-Nielsen, Lars
2605 Brondby (DK)**
• **Ellis, Andrew
Northwich, Cheshire (GB)**

(74) Representative: **Lucke, Andreas
Boehmert & Boehmert
Anwaltspartnerschaft mbB
Pettenkoferstrasse 22
80336 München (DE)**

(56) References cited:
**EP-A2- 1 396 742     US-A- 5 651 080
US-A1- 2004 042 714     US-A1- 2010 329 671**

**Description**

FIELD OF THE INVENTION

The invention relates to an optical communication system and to a method of processing data for optical network. In particular, the invention relates to a modal delay compensation scheme.

BACKGROUND OF THE INVENTION

With the continuing growth of demand for bandwidth, fiber optic transmission systems will inherently run into a capacity crunch on single mode fiber. The spectral efficiency of networks to date is practically limited to about 2b/s/Hz. In order to scale to higher spectral efficiencies, a denser constellation size than quadrature phase shift keying, QPSK, is required. However, a denser constellation will result in an increase in required optical signal to noise ratio, OSNR, and a reduction of the nonlinear tolerance. As a result, when scaling to denser constellation sizes, the feasible transmission distance is substantially decreased, adding significant cost to the network.

Recently multi-mode fibers have been proposed to significantly extend the nonlinear tolerance of the transmission system. In addition, these fibers can be used to increase the number of channels that can be transmitted through mode division multiplexing and multiple input multiple output, MIMO processing at the receiver. However, many challenges still remain before multimode transmission can be realized. One of the main problems for the realization of long haul transmission over multimode fiber is to cope with the difference in propagation group velocity or group delay between the modes. The delay between these modes makes it practically impossible to perform MIMO equalization at the receiver for long haul systems. It shall be noted, that the term multimode fiber is common for fibers allowing more than a single mode and comprises so-called few mode fibers as well. This terminology applies also for multimode systems, which comprise so-called few mode systems too.

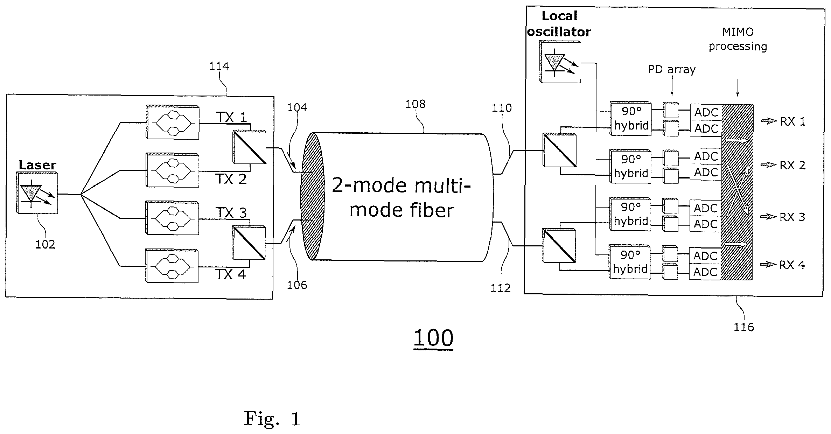

A promising method to realize higher capacities is to use fibers that support more than one single mode. One way of designing such multimode fibers to significantly increase the core size compared to that of conventional single mode fibers, which will result in higher effective area and consequently higher nonlinear tolerance. In addition, these fibers support more than one propagation mode, which allows the use of mode division multiplexing. The principle of mode division multiplexing is shown in Fig. 1. In this example, a 2-mode MIMO transmission system 100 is shown. At the transmitter 114, a single laser 102 is used to generate two polarization multiplexed signals 104, 106. The modulation format of these two signals can freely be chosen. After modulation, these signals are coupled into a multi-mode fiber 108. Many different methods exist to launch multiple signals into a multimode fiber, such as fiber 108. In the shown example, spatial separation is used in order to maximize the orthogonality of the two launched signals. It's worthwhile to mention that the signals do not necessarily need to be launched exactly into the two modes of the fiber: as long as the launching positions cause the signals to propagate in an orthogonal manner the capacity of the system can be maximized.

At the receiver 116, the main challenge is to receive the complete signal. In this example the multimode fiber 108 is coupled to two single mode fibers 110, 112. Please note that both single mode fibers will contain parts of the transmitted signal. As such, MIMO processing after coherent detection is required to separate the two launched modes again. The MIMO equalizer works only for a limited delay between the propagation modes. Thus, an important requirement for the receiver to work is that the delay between the different propagation modes is limited. This poses severe limitations to multimode fiber transmission. The problem to be solved is to overcome the disadvantages stated above and in particular to provide a solution that significantly reduces the modal delay between modes in a multi-mode transmission system.

European Patent number 1396742 discloses a system for adjusting chromatic dispersion of a WDM signal along a multimode optical medication online comprising a succession of mode converters along the multimode fibers.

US 2010/0329671 A1 discloses an optical communication system having an optical transmitter and an optical receiver optically coupled via a multipath fiber able of transmitting a transverse-mode-multiplexed signal. The transverse-mode-multiplexed signal has a plurality of independently modulated components that undergo statistical intermodal mixing in the multipath fiber by mode scramblers.

US 5651080 discloses an optical communication system comprising a mode converter.

SUMMARY OF THE INVENTION

In order to overcome the above-described need in the art, the present invention discloses a method for reducing modal group delay when transmitting optical signals over an optical fiber, the optical fiber having at least a first and a second mode of transmission, the method comprising the steps of transmitting a first optical signal in the first mode of transmission over a first portion of the optical fiber, transmitting a second optical signal in the second mode of transmission over the first portion of the optical fiber, converting the first mode of transmission to the second mode of transmission, and converting the second mode of transmission to the first mode of transmission, transmitting the first optical signal in the second mode of transmission over a second portion of the optical fiber, and transmitting the second optical signal in the first mode of transmission over the second portion of the optical fiber, thereby minimizing any difference in modal delay between the first and second optical signals.

In a further embodiment, the conversion of the first mode of transmission to the second mode of transmission and the conversion of the second mode of transmission to the first mode of transmission occurs along a length of the fiber, for example, at the middle of the span of fiber. Alternately, the conversion may occur at an appropriate network element side, e.g. an amplifier site.

In a next embodiment of the invention, the first portion of the optical fiber has substantially equal transmission characteristics to the second portion of the optical fiber.

In another embodiment, a method for reducing modal group delay when transmitting a plurality of optical signals over a transmission line that supports a plurality of modes is disclosed. The modes are converted at a plurality of positions along the transmission line so the signals in the end will experience approximately the same group delay. The method comprises the steps of receiving N number of optical signals into a multi mode fiber having at least N modes, transmitting each of N signals on a mode of the at least N modes of the multi mode fiber, converting each of the N modes on a different mode at N positions along the transmission line, such that the N signals the net modal group delay along the transmission line is minimized.

A further embodiment of the present invention includes a transmission link for transmitting N number of optical signals with minimal modal group delay. The system comprises a transmission line having at least one multi mode fiber with N number of modes, and N number of mode converters located at N positions along the transmission line.

These methods provide the following advantages:

a) A significant reduction in modal delay between modes in a multi mode transmission system.

b) A significant reduction in the digital signal processing, DSP, required to implement long haul MIMO transmission over multi mode fiber

c) Such methods have relatively broad applications and can be easily implemented.

## BRIEF DESCRIPTION OF THE DRAWINGS

The invention is explained by way of example in more detail below with the aid of the attached drawings.

Fig.1 is a schematic representation of multi-mode transmission system.

Fig.2 is a schematic representation of the mode-conversion according to an embodiment of the invention.

Fig.3 is a schematic representation of the mode-conversion according to an embodiment of the invention.

## DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

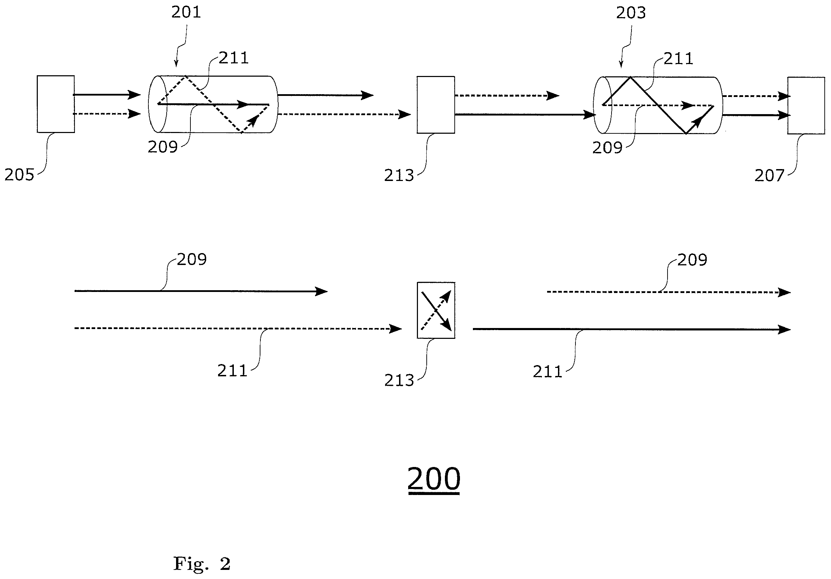

In order to mitigate modal group delay, a modal delay compensation scheme which includes mode conversion is disclosed. An exemplary embodiment of the invention is described using the 2-in, 2-out multi-mode transmission system shown in Fig 1. The concept of mode-conversion is illustrated in Fig. 2. In this figure, transmission link 200 comprises two fiber propagation segments, namely the first 201 and the second 203, a transmitter 205 (similar to transmitter 114 in Fig. 1), a mode converter 213, and a receiver 207 (similar to receiver 116 in Fig. 1). At the transmitter 205 two signals are launched into two separate modes of the fiber, namely a first mode 209 and a second mode 211. As modes 209 and 211 propagate through the first segment 201 of transmission, there will exist a propagation or modal delay between the two signals. In order to mitigate this delay, modes 209, 211 are converted by means of a mode converter 213 so that in the second segment 203 of the transmission link the delay between the two signals is compensated. As a result, the net modal delay between the two signals is minimal after transmission.

A challenge with exchanging the modes in the middle of a link is that in dynamically switched, mashed networks, the middle point of a link is not always on one defined point. As such, an alternative solution can be to exchange modes in the middle of every single fiber span. For transmission systems that support more than two modes, it is possible to convert all the modes at multiple places along the transmission line such that the average group velocity of the modes is approximately the same. Specifically, optical signals are transmitted over a multimode optical fiber transmission line, the multimode fiber having N modes of transmission, such that the multimode fiber receives N optical signals from N sources. Each of the N signals is received in each of the N modes of the multimode fiber.

As the modes propagate along the transmission line, modal group delay builds up between the modes for the reasons previously discussed. To compensate for such delay, the N modes are each converted to a different mode within the N group, each conversion occurring at a position along the transmission line, for a total of N positions, in order to equalize the difference in group velocity between the modes. Implementing such a method provides that at the end of the transmission line, each of the N optical signals will arrive approximately simultaneously (that is, at the same time).

Moreover, it is possible to compensate for the delays by separating the modes at the receiver and inserting optical or electrical delay lines to compensate for the modal delay. The delay of all modes depends on the transmission distance and fiber type.

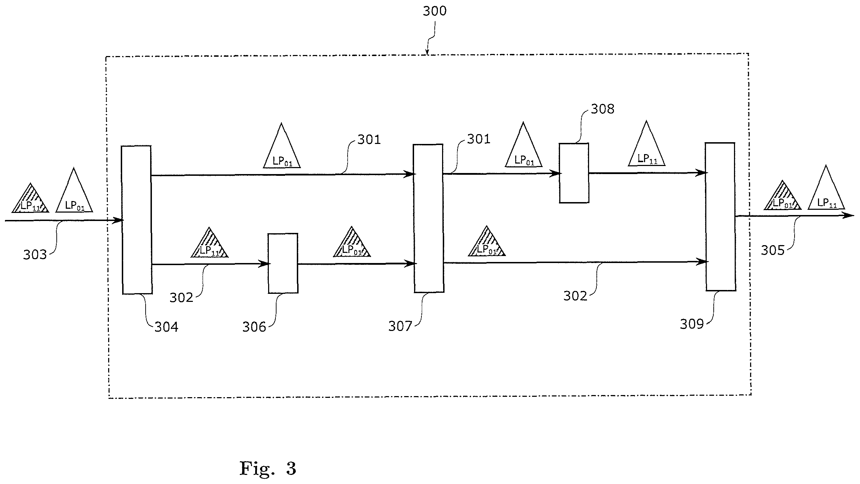

Assuming the mode coupling is predominantly associated with fiber interfaces, multi mode optical amplifiers etc, for each input signal, the output of a single span of transmission fiber will consist of a superposition of pulses, one pulse corresponding to each fiber mode. In one embodiment of the invention, the modes are demodulated at each amplifier site, and exchanged, as shown in an exemplary embodiment in Fig 3.

In Fig. 3, an amplifier site 300 along a transmission line is shown. An optical signal propagates through a multi mode fiber 303 in a first mode $LP_{01}$ and a second mode $LP_{11}$ into the amplifier site 300. As the modes reach a demultiplexer 304 (for example, a multi mode coupler), they are demultiplexed between multi mode fibers 301 and 302. While the first mode $LP_{01}$ goes straight through the first fiber 301, the second mode $LP_{11}$ crosses a mode converter 306 along the second fiber 302, and thereby the second mode $LP_{11}$ is converted to the first mode $LP_{01}$. EDFA amplification then occurs at 307. The converted first mode $LP_{01}$ goes straight through the first fiber 302 and then crosses a mode converter 308 along the first fiber 301, which converts the first mode $LP_{01}$ to the second mode $LP_{11}$. Fibers 301 and 303 then go through a multiplexer 309 and the pulses exit the amplifier site 300 through an output multi mode fiber 305. At the output of the amplifier site 300, the two pulses have been amplified and have swapped modes.

This mode exchange reduces the accumulation of differential mode delay from a linear accumulation to a random walk, or may even eliminate the differential mode delay completely in certain circumstances.

In a more general case, multi mode fibers can be used to guide and convert a plurality of modes $LP_{m,n}$, or N modes, where N is equal to or greater than 2. The number of guided $LP_{m,n}$ modes can be found by solving the scalar wave equation for the refractive index profile of the multi mode fiber. While $LP_{01}$ represents the fundamental mode, it is important to understand that each $LP_{mn}$ mode actually consists of two or four degenerate modes. When m=0, the mode is two-fold degenerate corresponding to two independent states of polarization. When m≥1, the mode is four-fold degenerate, having two independent spatial states, with each spatial state having two independent states of polarization. In a mode division multiplexed system one may chose several options in using the modes:

1. Send only one optical signal per LP-mode.

2. Send one signal per each polarization of the LP-mode (two signals per mode).

3. For the $LP_{mn}$ modes with m≥1, send one signal per spatial state (two signals per mode).

4. For the $LP_{mn}$ modes with m≥1, send one signal per spatial state and one for each polarization state (four signals per mode).

The description so far has assumed selecting option 1 or 2. However, for options 3 and 4, special precaution must be taken. Currently known methods for mode conversion, only work for one spatial state of the $LP_{mn}$ modes with m≥1. An embodiment of the present invention describes mode conversion for a system using N modes, for example, the fundamental mode $LP_{01}$, and the two spatial states of higher order mode $LP_{11}$, which are denoted as $LP_{11A}$ and $LP_{11B}$.

As a pulse or optical signal propagates through a multi mode fiber in a transmission line, the $LP_{01}$ and $LP_{11A}$ modes will convert or exchange places at a position of about one-third of a total length of the propagation path (between a transmitter and a receiver, for example). The $LP_{11B}$ mode remains unaffected until all three modes reach a position that is about two-thirds of the total path length. At this point, the $LP_{01}$ and $LP_{11B}$ modes will convert or exchange positions. The inventive system and methods thereby allow for all three modes to arrive at a desired end point having little to no modal group delay.

As such, these methods and systems can be applied to a number N of optical signals propagating through a transmission line in N modes, where the system comprises N transmitters for generating the N signals, and N mode converters placed along the transmission line for converting each of the N modes in order to minimize any modal group delay between the N modes at the end of the transmission line. An aspect of this embodiment includes placing the N mode converters at N positions along the transmission line such that the N positions are approximately equidistant between one another. That is, the N mode converters are positioned evenly along the transmission line, between spans of multi mode fiber.

Several technologies exist that can be used to realize mode-conversion of the co-propagating spatial modes of a multi moded fiber. Such mode converters can broadly be classified in to two classes: transverse and longitudinal transformers. Holographic plates and phase sensitive elements are examples of transverse transformers whereas long period fiber gratings are an example of a longitudinal transformer.

Long period fiber gratings (LPG) couple light from one mode into another by means of a periodic perturbation. The periodicity of the perturbation is essentially the period of the beat between two spatial modes. This perturbation can be implemented by several means such as, periodic exposure with UV-light, periodic exposure with a $CO_2$ laser, periodic exposure with heat, or periodic perturbation with a mechanical grating. The perturbation can be either azimuthally symmetric or asymmetric. In the case of an azimuthally symmetric perturbation, modes having the same symmetry will couple. In the case of an azimuthally asymmetric perturbation, modes having different symmetry or asymmetry will couple.

The coupling amplitude A can be written as an integral over the two modes and the periodic perturbation.

$$A = \int_{0}^{r_{fiber}} \int_{0}^{2\pi} E_1(r,\varphi) P_{r\varphi}(r,\varphi) E_2^*(r,\varphi) r \, dr \, d\varphi \int_{0}^{L_{LPG}} e^{i\beta_1 z} P_z(z) e^{i\beta_2 z} dz$$

Where $E_1(r,\varphi)$ and $E_2^*(r,\varphi)$ are the transverse part of the electric field and the complex conjugate of the transverse part of the electric field of the two modes while $\beta_1$, $\beta_2$ are the propagation constants of the two modes. The perturbation is assumed to be described by the product $P_{r\varphi}(r,\varphi) P_z(z)$. Thus the function $P_z(z)$ describes the periodicity of the perturbation. It is possible to obtain a phase matching condition, by requiring that also the last integral should be non-vanishing, thus:

$$\int_{0}^{L_{LPG}} e^{i\beta_1 z} P_z(z) e^{i\beta_2 z} dz \neq 0 \quad \Rightarrow abs(\beta_1 - \beta_2) \approx \frac{2\pi}{\Lambda}$$

Where $\Lambda$ is the period of the LPG and the integral is over the length of the LPG $L_{LPG}$. When the phase matching condition is fulfilled then light is transferred from the first mode to the second mode and since the amplitude integral is symmetric in the two modes then light from the first mode is also transferred to the second mode. Long period gratings thus represent a low loss (< 0.5 dB), efficient device.

Alternatively it is possible to transfer light between modes using a transverse transformer which usually consist of two lenses collimating the light from the input fiber onto a wave front manipulating element and then focusing the light onto the output fiber end. The role of the wave front manipulating element is to transform the incoming electric field $E_{in}(r,\varphi,z) = \sqrt{I_{in}(r,\varphi,z)} e^{i\phi_{in}(r,\varphi,z)}$ which is the farfield of one mode in the incoming fiber into the far field of another mode in the output fiber $E_{out}(r,\varphi,z) = \sqrt{I_{out}(r,\varphi,z)} e^{i\phi_{out}(r,\varphi,z)}$ .

$I_{in}(r,\varphi,z), I_{out}(r,\varphi,z)$ represents the intensity profile and $\phi_{in}(r,\varphi,z)$, $\phi_{out}(r,\varphi,z)$ represents the phase of the input and output field, respectively. One example could be a simple phase only optical element where one half of the plate is providing a half wave retardation thus enabling coupling light between the symmetric $LP_{01}$ and the antisymmetric $LP_{11}$:

$$I_{in}(r,\varphi) = \begin{cases} I_{out}(r,\varphi) & for \quad \varphi < \pi \\ I_{out}(r,\varphi) + \pi & for \quad \varphi > \pi \end{cases}$$

Since the intensity profiles $I_{in}(r,\varphi,z)$, $I_{out}(r,\varphi,z)$ do not match, the device will in general also couple a fraction of the light into undesired modes (either propagating modes or leaky modes, the latter leading to loss). The mismatch between the intensity profiles can be improved by introducing loss, which would minimize the coupling to unwanted modes however introducing additional loss is in many cases undesirable.

An alternative approach is to use an optical system comprising two wave front manipulating elements, which are known to be a low loss, efficient approach for transferring light between modes.

The present invention is not limited to the details of the above described principles. The scope of the invention is defined by the appended claims and all changes and modifications as fall within the equivalents of the scope of the claims are therefore to be embraced by the invention. Mathematical conversions or equivalent calculations of the signal values based on the inventive method or the use of analogue signals instead of digital values are also incorporated.

REFERENCE SIGN LIST

| | |
|---|---|
| 100, 200 | mode division multiplexed system |
| 201 | first portion |
| 203 | second portion |
| 209 | first mode of transmission |
| 211 | second mode of transmission |
| 300 | amplifier site |
| 301 | first multi mode fiber |
| 302 | second multi mode fiber |
| 305 | multi mode fiber |
| $LP_{01}$ | first mode |
| $LP_{11}$ | second mode |
| $LP_{11A}$ | second mode |
| $LP_{11B}$ | third mode |

**Claims**

1. A method of transmitting optical signals over an optical fiber in a mode division multiplexed system (100; 200), the optical fiber having a first and a second mode of transmission, the method comprising:

   - transmitting a first optical signal on the first mode of transmission (209) over a first portion ($_{201}$) of the optical fiber;
   - transmitting a second optical signal on the second mode of transmission (211) over the first portion ($_{201}$) of the optical fiber;
   - transmitting the first optical signal on the second mode of transmission (211) over a second portion (203) of the optical fiber; and
   - transmitting the second optical signal on the first mode of transmission (209) over the second portion (203) of the optical fiber.

2. The method of claim 1, wherein the signals propagate in an orthogonal manner.

3. The method of claim 1 or 2, further comprising an initial step of launching the first optical signal into the first mode of transmission (209) and the second optical signal into the second mode of transmission (211).

4. The method of any of the preceding claims, further comprising:

   - converting the first mode of transmission (209) to the second mode of transmission (211); and
   - converting the second mode of transmission (211) to the first mode of transmission (209).

5. The method of claim 4, wherein the conversion of the first mode of transmission (209) to the second mode of transmission (211) and the conversion of the second mode of transmission (211) to the first mode of transmission (209) is realized within a network element site.

6. The method of any of the preceding claims, wherein the first portion ($_{201}$) of the optical fiber has substantially the equal transmission characteristics to the second portion (203) of the optical fiber.

7. The method of any of the preceding claims, wherein the first mode of transmission (209) and the second mode of transmission (211) are exchanged at the middle of the optical fiber.

8. The method of any of the preceding claims, wherein modes are converted at multiple places along the transmission line such that that the average group velocity of the modes is approximately the same if more than two modes are supported.

9. The method of any of the preceding claims, wherein the first mode of transmission (209) and the second mode of transmission (211) are separated at the receiver and optical or electrical delay lines are inserted to compensate modal delay.

10. The method of any of the preceding claims, wherein the first and second mode of transmission are exchanged at an amplifier site (300) along the optical fiber, the method comprising:

- demultiplexing the first mode ($LP_{01}$) and the second mode ($LP_{11}$) between a first (301) and a second (302) multi mode fibers;
- converting the second mode ($LP_{11}$) to the first mode ($LP_{01}$) along the second multi mode fiber (302);
- providing amplification in the first (301) and the second (302) multi mode fiber;
- converting the first mode ($LP_{01}$) to the second mode ($LP_{11}$) along the first multimode fiber (301); and
- multiplexing the first ($LP_{01}$) and second modes ($LP_{11}$) to a multi mode fiber (305).

11. The method of any of the preceding claims, wherein the optical fiber has a third mode of transmission, the method comprising:

- converting the first ($LP_{01}$) and the second mode ($LP_{11A}$) of transmission or exchanging the places thereof at a position of about one third of the total length of the propagation path;
- leading the third mode ($LP_{11B}$) of transmission unaffected until all three modes reach a position that is about two thirds of the total path length;
- converting the first ($LP_{01}$) and the third mode ($LP_{11B}$) of transmission or exchanging the places thereof at said position being two thirds of the total path length;

thereby allowing for all three modes to arrive at a desired endpoint having little to no modal group delay.

12. The method of claim 11, wherein the second ($LP_{11A}$) and third modes ($LP_{11B}$) of transmission are the two spatial states of a higher order mode ($LP_{11}$).

**Patentansprüche**

1. Verfahren zum Übertragen von optischen Signalen über eine optische Faser in einem Moden-Multiplexsystem (100; 200), wobei die optische Faser eine erste und eine zweite Übertragungsmode aufweist, wobei das Verfahren folgendes umfasst:

- Übertragen eines ersten optischen Signals in der ersten Übertragungsmode (209) über einen ersten Abschnitt ($_{201}$) der optischen Faser;
- Übertragen eines zweiten optischen Signals in der zweiten Übertragungsmode (211) über den ersten Abschnitt ($_{201}$) der optischen Faser;
- Übertragen des ersten optischen Signals in der zweiten Übertragungsmode (211) über einen zweiten Abschnitt (203) der optischen Faser; und
- Übertragen des zweiten optischen Signals in der ersten Übertragungsmode (209) über den zweiten Abschnitt (203) der optischen Faser.

2. Verfahren nach Anspruch 1, wobei die Signale orthogonal propagieren.

3. Verfahren nach Anspruch 1 oder 2, das ferner einen anfänglichen Schritt umfasst, in dem das erste optische Signal in die erste Übertragungsmode (209) eingeführt wird und das zweite optische Signal in die zweite Übertragungsmode (211) eingeführt wird.

4. Verfahren nach einem der vorhergehenden Ansprüche, wobei das Verfahren ferner Folgendes umfasst:

- Umwandeln der ersten Übertragungsmode (209) in die zweite Übertragungsmode (211); und

- Umwandeln der zweiten Übertragungsmode (211) in die erste Übertragungsmode (209).

5. Verfahren nach Anspruch 4, wobei das Umwandeln der ersten Übertragungsmode (209) in die zweite Übertragungsmode (211) und das Umwandeln der zweiten Übertragungsmode (211) in die erste Übertragungsmode (209) innerhalb eines Netzwerkelements stattfindet.

6. Verfahren nach einem der vorhergehenden Ansprüche, wobei der erste Abschnitt ($_{201}$) der optischen Faser im Wesentlichen die gleichen Übertragungseigenschaften wie der zweite Abschnitt (203) der optischen Faser aufweist.

7. Verfahren nach einem der vorhergehenden Ansprüche, wobei die erste Übertragungsmode (209) und die zweite Übertragungsmode (211) in der Mitte der optischen Faser ausgetauscht werden.

8. Verfahren nach einem der vorhergehenden Ansprüche, wobei Moden an mehreren Stellen entlang der Übertragungsleitung umgewandelt werden, so dass die durchschnittliche Gruppengeschwindigkeit der Moden ungefähr die gleiche ist, wenn mehr als zwei Moden verwendet werden.

9. Verfahren nach einem der vorhergehenden Ansprüche, wobei die erste Übertragungsmode (209) und die zweite Übertragungsmode (211) an dem Empfänger getrennt werden, und wobei optische oder elektrische Verzögerungsleitungen eingefügt werden, um Modenverzögerung zu kompensieren.

10. Verfahren nach einem der vorhergehenden Ansprüche, wobei die erste und die zweite Übertragungsmode an einem Verstärkerelement (300) entlang der optischen Faser ausgetauscht werden, wobei das Verfahren folgendes umfasst:

   - Demultiplexen der ersten Mode ($LP_{01}$) und der zweiten Mode ($LP_{11}$) zwischen einer ersten (301) und einer zweiten (302) Multimodenfaser;
   - Umwandeln der zweiten Mode ($LP_{11}$) in die erste Mode ($LP_{01}$) entlang der zweiten Multimodenfaser (302);
   - Bereitstellen einer Verstärkung in der ersten (302) und in der zweiten (302) Multimodenfaser;
   - Umwandeln der ersten Mode ($LP_{01}$) in die zweite Mode ($LP_{11}$) entlang der ersten Multimodenfaser (301); und
   - Multiplexen der ersten ($LP_{01}$) und der zweiten Mode ($LP_{11}$) an eine Multimodenfaser (305).

11. Verfahren nach einem der vorhergehenden Ansprüche, wobei die optische Faser eine dritte Übertragungsmode aufweist, wobei das Verfahren folgendes umfasst:

   - Umwandeln oder Austausuchen der ersten ($LP_{01}$) und der zweiten ($LP_{11A}$) Übertragungsmode an einer Position bei ungefähr einem Drittel der Gesamtlänge des Verbreitungspfades;
   - Leiten der dritten Übertragungsmode ($LP_{11B}$) unverändert bis alle drei Moden eine Stelle erreichen, die bei ungefähr zwei Drittel der gesamten Pfadlänge liegt;
   - Umwandeln oder Austauschen der ersten ($LP_{01}$) und der dritten ($LP_{11B}$) Übertragungsmode an der besagten Position, die bei zwei Drittel der gesamten Pfadlänge liegt;

   wodurch es ermöglicht wird, dass alle drei Moden beim Erreichen eines gewünschten Endpunkts wenig bis keine Modengruppenverzögerung aufweisen.

12. Verfahren nach Anspruch 11, wobei die zweite ($LP_{11A}$) und die dritte ($LP_{11B}$) Übertragungsmode die zwei Raumzustände einer Mode ($LP_{11}$) einer höheren Ordnung sind.


**Revendications**

1. Procédé de transmission de signaux optiques sur une fibre optique dans un système multiplexé par répartition en mode (100 ; 200), la fibre optique ayant des premier et deuxième modes de transmission, le procédé comprenant :

   - la transmission d'un premier signal optique sur le premier mode de transmission (209) sur une première partie ($_{201}$) de la fibre optique ;
   - la transmission d'un deuxième signal optique sur le deuxième mode de transmission (211) sur la première partie ($_{201}$) de la fibre optique ;
   - la transmission du premier signal optique sur le deuxième mode de transmission (211) sur une deuxième partie (203) de la fibre optique ; et

- la transmission du deuxième signal optique sur le premier mode de transmission (209) sur la deuxième partie (203) de la fibre optique.

2. Procédé selon la revendication 1, dans lequel les signaux se propagent de manière orthogonale.

3. Procédé selon la revendication 1 ou 2, comprenant en outre une étape initiale pour lancer le premier signal optique dans le premier mode de transmission (209) et le deuxième signal optique dans le deuxième mode de transmission (211).

4. Procédé selon l'une quelconque des revendications précédentes, comprenant en outre :

   - la conversion du premier mode de transmission (209) en le deuxième mode de transmission (211) ; et
   - la conversion du deuxième mode de transmission (211) en le premier mode de transmission (209).

5. Procédé selon la revendication 4, dans lequel la conversion du premier mode de transmission (209) en le deuxième mode de transmission (211) et la conversion du deuxième mode de transmission (211) en le premier mode de transmission (209) sont réalisées dans un site d'élément de réseau.

6. Procédé selon l'une quelconque des revendications précédentes, dans lequel la première partie ($_{201}$) de la fibre optique a sensiblement les mêmes caractéristiques de transmission que la deuxième partie (203) de la fibre optique.

7. Procédé selon l'une quelconque des revendications précédentes, dans lequel le premier mode de transmission (209) et le deuxième mode de transmission (211) sont échangés au milieu de la fibre optique.

8. Procédé selon l'une quelconque des revendications précédentes, dans lequel les modes sont convertis à de multiples emplacements le long de la ligne de transmission de sorte que les vitesses de groupe moyennes des modes soient à peu près les mêmes si plus de deux modes sont pris en charge.

9. Procédé selon l'une quelconque des revendications précédentes, dans lequel le premier mode de transmission (209) et le deuxième mode de transmission (211) sont séparés au niveau du récepteur et des lignes de retard optiques ou électriques sont insérées pour compenser un retard modal.

10. Procédé selon l'une quelconque des revendications précédentes, dans lequel les premier et deuxième modes de transmission sont échangés au niveau d'un site d'amplificateur (300) le long de la fibre optique, le procédé comprenant :

    - le démultiplexage du premier mode ($LP_{01}$) et du deuxième mode ($LP_{11}$) entre des première (301) et deuxième (302) fibres multimodes ;
    - la conversion du deuxième mode ($LP_{11}$) en le premier mode ($LP_{01}$) le long de la deuxième fibre multimode (302) ;
    - la prévision d'une amplification dans les première (301) et deuxième (302) fibres multimodes ;
    - la conversion du premier mode ($LP_{01}$) en le deuxième mode ($LP_{11}$) le long de la première fibre multimode (301) ; et
    - le multiplexage des premier ($LP_{01}$) et deuxième ($LP_{11}$) modes vers une fibre multimode (305).

11. Procédé selon l'une quelconque des revendications précédentes, dans lequel la fibre optique a un troisième mode de transmission, le procédé comprenant :

    - la conversion des premier ($LP_{01}$) et deuxième ($LP_{11A}$) modes de transmission ou l'échange des emplacements de ceux-ci à une position à environ un tiers de la longueur totale du trajet de propagation ;
    - la propagation du troisième ($LP_{11B}$) mode de transmission sans qu'il soit affecté jusqu'à ce que les trois modes atteignent une position qui est à environ les deux tiers de la longueur de trajet totale ;
    - la conversion du premier ($LP_{01}$) et du troisième ($LP_{11B}$) mode de transmission ou l'échange des emplacements de ceux-ci à ladite position aux deux tiers de la longueur de trajet totale ;

permettant de ce fait l'arrivée des trois modes au niveau d'un point d'extrémité souhaité ayant peu voire aucun retard de groupe modal.

12. Procédé selon la revendication 11, dans lequel les deuxième ($LP_{11A}$) et troisième ($LP_{11B}$) modes de transmission sont les deux états spatiaux d'un mode d'ordre supérieur (LP11).

Fig. 1

EP 3 110 041 B1

**200**

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1396742 A
- US 20100329671 A1
- US 5651080 A